Europäisches Patentamt

European Patent Office

Office européen des brevets

(11) Numéro de publication: **0 150 843**
A2

# DEMANDE DE BREVET EUROPEEN

(21) Numéro de dépôt: **85100880.5**

(22) Date de dépôt: **29.01.85**

(51) Int. Cl.⁴: **G 10 K 11/30, G 01 H 3/12**

---

(30) Priorité: **02.02.84 FR 8401597**

(43) Date de publication de la demande: **07.08.85**
**Bulletin 85/32**

(84) Etats contractants désignés: **BE CH DE FR GB IT LI LU NL SE**

(71) Demandeur: **COMPAGNIE GENERALE D'ELECTRICITE Société anonyme dite:, 54, rue La Boétie, F-75382 Paris Cedex 08 (FR)**

(72) Inventeur: **Nongaillard, Bertrand, 5 rue Blanqui, F-59135 Wallers (FR)**
Inventeur: **Camus, Liévin, 5 rue Couthon App. 64 Aulnoy, F-59300 Valenciennes (FR)**
Inventeur: **Boudy, Pierre, 16 Place Jean-Jacques Rousseau, F-59135 Wallers (FR)**
Inventeur: **Rouvaen, Jean-Michel, 45 rue du Jolimetz, F-59300 Valenciennes (FR)**
Inventeur: **Saisse, Henri, 15 rue Pasteur, F-91000 Bondoufle (FR)**
Inventeur: **Fevrier, Hervé, 3A rue des Iris, F-92160 Antony (FR)**

(74) Mandataire: **Weinmiller, Jürgen et al, Zeppelinstrasse 63, D-8000 München 80 (DE)**

---

(54) **Dispositif à ondes acoustiques focalisées pour étudier la structure d'un objet.**

(57) Il comporte une sonde électroacoustique (3) comprenant un monocristal (8) sur lequel est fixé un transducteur (4 à 7) alimenté par un générateur électrique (1) de fréquence 100 MHz, cette sonde présentant n surfaces courbes coaxiales (10, 11) formant n lentilles acoustiques, le transducteur délivrant des impulsions d'énergie acoustique focalisées par les lentilles de la sonde dans l'objet à étudier (13), ces impulsions étant réfléchies par l'objet pour former sur le transducteur des signaux électriques de retour. Il comporte en outre des moyens de déplacement (15) de l'objet par rapport à la sonde et un circuit de traitement (16) apte à former des images de la structure de l'objet (13) à partir des signaux électriques de retour.

Application au contrôle non destructif d'échantillons de céramique.

Dispositif à ondes acoustiques focalisées  pour étudier la structure
d'un objet

La présente invention concerne un dispositif à ondes acoustiques
focalisées pour étudier la structure d'un objet, du type comportant une
sonde acoustique comprenant

- un transducteur électro-acoustique composé d'un élément médian et d'un
élément annulaire entourant l'élément médian,
- et une pièce d'un matériau capable de transmettre lesdites ondes acoustiques, cette pièce présentant une face plane sur laquelle est fixée le
transducteur et une face courbe disposée suivant un axe de la sonde, la
face courbe comprenant une surface médiane et une surface annulaire
opposées respectivement à l'élément médian et à l'élément annulaire du
transducteur, les surfaces médiane et annulaire ayant des rayons de
courbures différents l'un de l'autre et se raccordant suivant une ligne
circulaire,
cette sonde permettant de former simultanément dans l'objet, par impulsions, deux zones de focalisation d'ondes acoustiques, suivant ledit axe
à des profondeurs différentes, et d'analyser les échos provenant de ces
zones.

Un dispositif de ce type est décrit dans la demande de brevet de la
République Fédérale Allemande 2.719.119.

Le microscope acoustique décrit dans la demande allemande ne
permet pas de visualiser les défauts de la structure interne d'un objet.

La présente invention a pour but de réaliser un dispositif à ondes
acoustiques focalisées pour étudier la structure interne d'un objet de
volume relativement important, ce dispositif permettant de détecter les
défauts de structure de l'objet et de visualiser les défauts détectés en
un temps particulièrement court.

La présente invention a pour objet un dispositif à ondes acoustiques focalisées pour étudier la structure d'un objet, du type mentionné
ci-dessus, caractérisé en ce que, pour réaliser simultanément deux
images acoustiques de l'objet à des profondeurs différentes dans des
plans perpendiculaires à l'axe de la sonde, le dispositif comporte en
outre

- un générateur électrique relié au transducteur à travers des moyens de commutation desdits éléments, ce générateur fonctionnant à une fréquence supérieure ou égale à 50 MHz et étant capable de délivrer une suite d'impulsions électriques, ces impulsions étant synchronisées avec la cadence de commutation,

un milieu fluide étant en contact avec l'objet et la face courbe de la pièce, l'indice de réfraction acoustique de cette pièce étant supérieur à quatre, ce milieu étant capable de transmettre les impulsions d'ondes acoustiques formées par ladite pièce en réponse auxdites impulsions électriques,

- des moyens de déplacement relatif de l'objet et de la sonde, ces moyens étant capables de délivrer des informations sur la position de l'objet par rapport à la sonde,

- et un circuit de traitement relié au transducteur et aux moyens de déplacement, ce circuit recevant les signaux électriques de retour délivrés par le transducteur en réponse aux échos des impulsions acoustiques renvoyées par lesdites zones de l'objet, ces signaux électriques de retour étant représentatifs de la structure interne de l'objet, le circuit de traitement étant capable de former des images desdites zones à partir de ces signaux électriques de retour.

Des formes particulières d'exécution de l'objet de la présente invention sont décrites ci-dessous, à titre d'exemple, en référence aux dessins annexés dans lesquels

- la figure 1 représente schématiquement un mode de réalisation du dispositif selon l'invention,

- la figure 2 est une vue partielle dans l'espace d'une variante du dispositif illustré par la figure 1, cette vue montrant notamment les moyens pour déplacer l'objet et la sonde l'un par rapport à l'autre,

- et la figure 3 est une vue d'un mode de réalisation particulier d'une sonde électroacoustique du dispositif illustré par la figure 1.

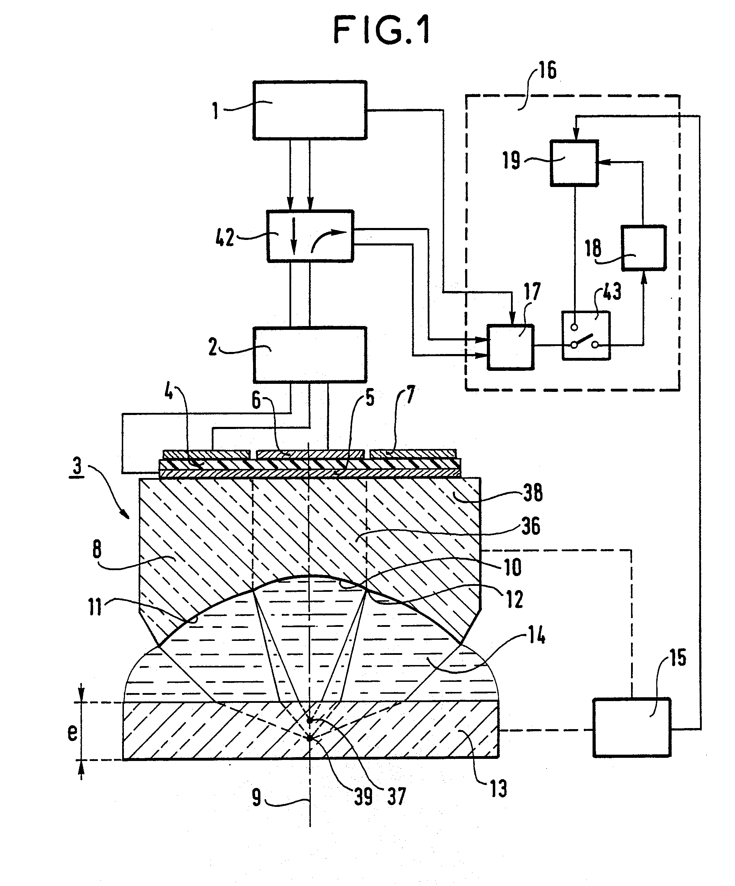

En référence à la figure 1, un générateur électrique 1 est capable d'émettre une suite d'impulsions d'énergie électrique modulée à une haute fréquence de l'ordre de 100 MHz par exemple. Les sorties du générateur 1 sont reliées, à travers un coupleur directif 42 et un circuit de commutation 2, à un transducteur électroacoustique faisant partie d'une sonde électroacoustique 3. Le transducteur comporte une plaque circulaire 4 d'un matériau piézoélectrique. Une face de la plaque 4 est recouverte en totalité d'une couche métallique constituant une électrode 5 du transducteur. L'autre face de la plaque est recouverte dans sa partie médiane d'une couche métallique circulaire et d'une couche métallique annulaire entourant la couche circulaire mais distincte de celle-ci, ces deux couches constituant respectivement des électrodes 6 et 7 opposées à l'électrode 5. Les électrodes 5, 6 et 7 sont reliées par des fils de connexion respectivement à trois sorties du circuit de commutation 2.

La sonde électroacoustique 3 comprend en outre un monocristal de corindon 8 d'indice de réfraction acoustique égal à 7,3, ce monocristal étant apte à transmettre les ondes acoustiques. Une face plane circulaire du monocristal est fixée sur la face extérieure de l'électrode 5 du transducteur électroacoustique. Le monocristal 8 comporte une surface latérale sensiblement cylindrique autour d'un axe 9 coupant perpendiculairement la face plane en son centre. Le monocristal est délimité, du côté opposé à cette surface plane, par deux surfaces courbes centrées sur l'axe 9 : une surface courbe médiane 10 et une surface courbe annulaire 11 entourant la surface 10 et se raccordant avec elle suivant un bord circulaire 12. La surface courbe 10 est opposée à l'électrode 6 du transducteur, tandis que la surface courbe 11 est opposée à l'électrode 7, les rayons de courbure de ces surfaces étant différents l'un de l'autre. Ces surfaces courbes qui sont sphériques dans l'exemple décrit peuvent être aussi cylindriques.

Bien que le monocristal 8 tel que représenté sur la figure ne comporte que deux surfaces courbes, il est clair qu'il peut comporter un nombre n de surfaces courbes coaxiales, n étant égal ou supérieur à deux, ces n surfaces formant successivement, de l'axe à la périphérie de la sonde, n lentilles acoustiques coaxiales. Pour cette raison la sonde 3 est appelée sonde multilentille. Bien entendu, les électrodes concentriques extérieures de la sonde sont alors au nombre de n au lieu de 2, chacune de ces électrodes étant opposée à une surface courbe du monocristal 8.

Un échantillon 13 formant l'objet à contrôler, constitué par exemple par une plaque d'alumine, est disposé perpendiculairement à l'axe 9, à la sortie des lentilles. Un matériau fluide 14 tel que l'eau, apte à transmettre les ondes acoustiques, occupe l'espace compris entre les surfaces courbes du monocristal et la surface en regard de l'échantillon.

Des moyens de déplacement 15 permettent de modifier la position respective de la sonde 8 et de l'échantillon 13.

Un circuit de traitement 16 comporte trois circuits élémentaires : un circuit à fenêtre 17, un circuit à seuil 18 et un circuit de réception et d'affichage 19. Le circuit 17 est relié au coupleur directif 42 et au générateur 1. Le circuit 18 est relié au circuit 19, et au circuit 17 à travers un commutateur 43 à deux positions. Le circuit 19 est relié au circuit 17 à travers le commutateur 43. Les moyens de déplacement 15 comportent des capteurs de déplacement dont les sorties sont reliées au circuit 19.

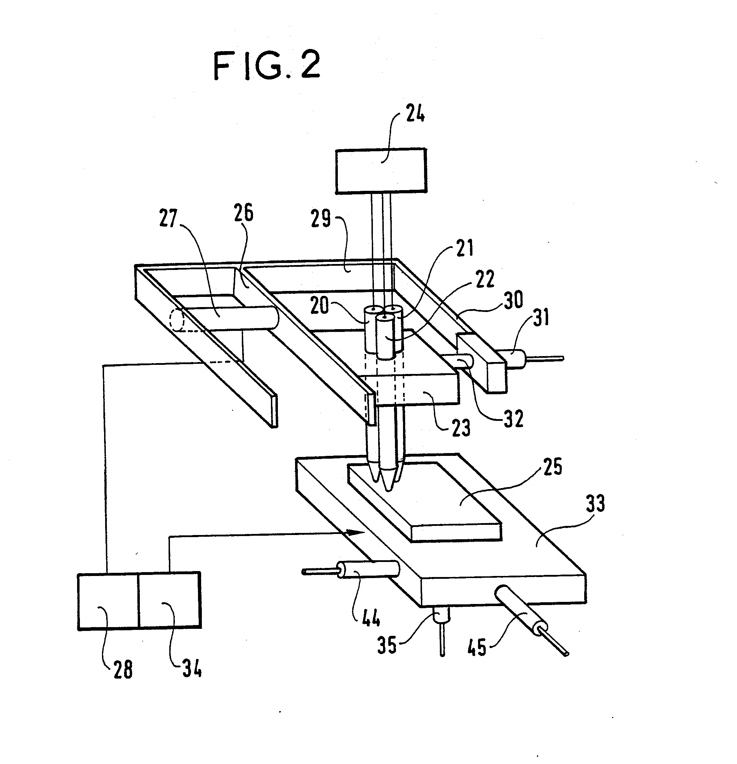

La figure 2 représente partiellement une variante de réalisation du dispositif illustré par la figure 1. Dans cette variante, plusieurs sondes multilentilles 20, 21 et 22 sont fixées sur un support 23 à proximité l'une de l'autre, de manière que les axes de ces sondes soient parallèles entre eux. Chacune de ces sondes est du type de la sonde 3 (figure 1) et les électrodes des transducteurs électroacoustiques portés par ces sondes sont reliées aux sorties d'un circuit de commutation 24 du type du circuit 2 (figure 1).

La figure 2 montre aussi un mode de réalisation des moyens de déplacement mutuel des sondes 20, 21 et 22 et d'un échantillon 25 à étudier. Le support 23 est fixé sur une branche horizontale d'un diapason 26 entretenu électriquement par un noyau bobiné 27 connecté à un circuit d'alimentation électrique 28. Le diapason 26 est fixé lui-même sur un support 29 comportant un bras 30 parallèle aux branches du diapason. Un capteur de position 31 qui peut être par exemple du type inductif est fixé sur le bras 30 en regard d'un prolongement 32 du support 23. Le capteur 31 est relié au circuit 19 (figure 1). L'échantillon 25 est placé horizontalement sur une table 33, les axes des sondes 20 à 22 étant verticaux. La table 33 peut être déplacée parallèlement à elle-même suivant la verticale et suivant deux directions perpendiculaires du plan horizontal. Le déplacement est effectué par des moteurs non représentés, connectés à un circuit de commande 34. Des capteurs 35, 44 et 45 reliés au circuit 19 (figure 1) enregistrent les déplacements de la table suivant les trois directions précitées.

Le dispositif représenté sur la figure 1 fonctionne de la manière suivante.

Le coupleur directif 42 relie le générateur 1 au circuit de commutation 2. Celui-ci est synchronisé avec le générateur 1, de manière à appliquer successivement une première impulsion de ce générateur entre les électrodes 5 et 6, une deuxième impulsion entre les électrodes 5 et 7, une troisième impulsion entre les électrodes 5 et 6, et ainsi de suite. Le transducteur électroacoustique crée donc, dès l'émission de la première impulsion, une première onde acoustique se propageant dans la partie médiane 36 du monocristal 8 vers la surface courbe 10. L'onde acoustique focalisée par la surface 10 se propage dans le matériau fluide 14 vers un point de focalisation 37 situé à l'intérieur de l'échantillon 13. L'énergie acoustique focalisée au point 37 est partiellement réfléchie par le matériau de l'échantillon 13 lorsque le point 37 est situé dans l'échantillon 13 à un endroit où il y a un défaut de structure du matériau. Il se forme alors une impulsion acoustique réfléchie dont l'intensité est représentative des défauts de structure interne de l'échantillon au point de focalisation. L'impulsion acoustique de retour traverse en sens inverse le matériau fluide 14 et la partie 36 du monocristal 8 pour former un signal électrique de retour entre les électrodes 5 et 6 du transducteur.

A l'émission de la deuxième impulsion, le transducteur crée une deuxième onde acoustique qui se propage dans la partie périphérique 38 du monocristal vers la surface courbe 11. Après focalisation en un autre point 39 situé sur l'axe 9 dans l'échantillon, une partie de l'énergie acoustique de l'onde est éventuellement réfléchie pour former un autre signal électrique de retour entre les électrodes 5 et 7 du transducteur.

Bien entendu, comme il a été dit plus haut, le monocristal peut comporter n lentilles acoustiques, n pouvant être supérieur à deux, de façon à former n points de focalisation régulièrement répartis dans l'épaisseur "e" de l'échantillon. Chaque point de focalisation correspond en réalité à un petit volume de l'échantillon.

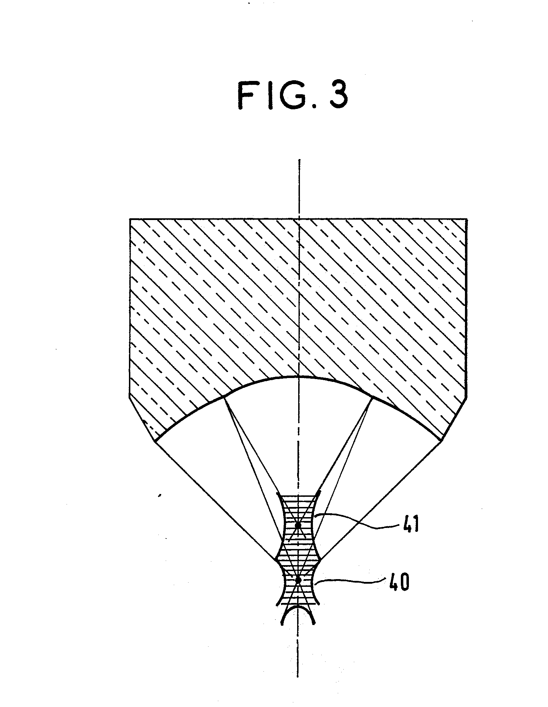

Il est également possible, comme indiqué sur la figure 3, de réaliser une sonde multilentille comportant par exemple deux lentilles successives dont les rayons de courbure sont suffisamment proches l'un de l'autre pour que les volumes de concentration 40 et 41 de ces deux lentilles soient juxtaposés suivant l'axe de la sonde, de façon à former un volume total de concentration intéressant une fraction notable de l'épaisseur "e" de l'échantillon. Dans ce cas, les deux lentilles sont excitées simultanément, le circuit de commutation 2 n'étant pas utilisé.

Enfin, lorsqu'on dispose plusieurs sondes multilentilles sur un support comme indiqué sur la figure 2, on voit qu'il est possible de former, à l'intérieur du matériau de l'échantillon, plusieurs volumes de concentration d'énergie acoustique disposés suivant des axes parallèles entre eux et rapprochés l'un de l'autre. Les volumes de concentration des différentes sondes peuvent intéresser au total une fraction encore plus importante de l'épaisseur de l'échantillon, et même dans certains cas la totalité de cette épaisseur.

Cette disposition est utilisée de préférence lorsqu'on désire explorer le volume de l'échantillon pour détecter et repérer ses défauts de structure interne. Dans ce cas, le commutateur 43 est actionné pour relier entre eux les circuits 17 et 18, la liaison directe entre les circuits 17 et 19 étant coupée. Le diapason 26 n'étant pas excité, on commande par le circuit 34 le déplacement de la table mobile 33 de façon que les volumes de concentration des différentes sondes balayent le volume total de l'échantillon. Ce déplacement de grande amplitude est réalisé au moyen de moteurs pas à pas. Les signaux électriques de retour formés pendant ce balayage sur les électrodes des transducteurs des différentes sondes sont reçus à travers le circuit de commutation 2 par le coupleur directif 42 qui les transmet au circuit 17. Celui-ci ne peut amplifier ces signaux que s'ils sont reçus dans une fenêtre temporelle qui correspond à un intervalle de temps prédéterminé. Dans le cas où on désire explorer toute l'épaisseur de l'échantillon, les limites extrêmes de cet intervalle de temps correspondent aux échos acoustiques provenant des deux faces extrêmes de l'échantillon. Ce circuit à fenêtre permet d'éliminer les signaux de retour parasites reçus par le circuit 17 en dehors de cette fenêtre.

Les signaux de retour traversent ensuite le circuit à seuil 18 qui permet d'éliminer tous les signaux électriques de retour dont l'amplitude est inférieure à un seuil prédéterminé.

Les signaux électriques sortant du circuit à seuil 18 sont reçus par le circuit 19 qui reçoit aussi l'information de la position de la table 33 par rapport aux sondes. Ce circuit 19 peut donc afficher les défauts importants de structure de l'échantillon ainsi que la localisation de ces défauts dans l'échantillon. Bien entendu, l'importance des défauts détectés par le dispositif dépend du réglage du seuil du circuit 18.

Après la détection, décrite ci-dessus, des défauts importants de structure de l'échantillon, le dispositif illustré par les figures 1 et 2 peut être adapté à la formation d'images des défauts détectés. Dans ce cas, le commutateur 43 est actionné pour relier entre eux les circuits 17 et 19, la liaison entre les circuits 17 et 18 étant coupée. L'opérateur n'utilise qu'une seule sonde, et il règle au départ la position de la table 33 de manière que les volumes de concentration de la sonde soient disposés à proximité d'un défaut détecté dont il se propose de former l'image. Il fait ensuite vibrer le diapason 26 et provoque un déplacement de la table 33 dans une direction perpendiculaire à l'axe de la sonde et à la direction de vibration du diapason. Le déplacement de la table est alors réalisé à l'aide d'un moteur à courant continu. L'amplitude totale du déplacement de la table est ici beaucoup plus faible que lorsqu'on utilise le dispositif pour la détection des défauts.

Au cours de ce déplacement, au moins une des zones de concentration de la sonde vient traverser le défaut.

Dans une forme de réalisation avantageuse toutes ces opérations sont commandées à l'aide d'un microordinateur.

Le circuit 17 est réglé de manière à n'enregistrer les signaux de retour que dans une fenêtre temporelle très étroite correspondant au plan d'analyse du matériau dans lequel l'image du défaut doit être effectuée. De plus, le circuit à seuil 18 n'est pas utilisé. Le circuit 19 reçoit donc d'une part tous les signaux de retour ayant traversé le circuit 17 et d'autre part les informations provenant des capteurs 31, 35, 44 et 45 représentatives de la position respective de l'objet et de la sonde. Il peut donc élaborer une image de ce défaut dans le plan d'analyse. Bien entendu si les différentes zones de concentration de la sonde sont suffisamment rapprochées l'une de l'autre pour traverser le défaut suivant différents plans d'analyse, on obtient simultanément une image dans chacun de ces plans d'analyse.

Le dispositif selon l'invention décrit ci-dessus présente des avantages importants.

Il permet d'abord d'effectuer un contrôle non destructif d'un échantillon dans un temps relativement court. En effet, la détection préalable des défauts importants d'un échantillon, ceux-ci étant en pratique les seuls nocifs, peut être effectuée rapidement, cette opération de détection limitant le nombre d'images utiles à réaliser.

La fréquence acoustique du générateur est comprise entre 50 et 300 MHz, ce qui permet d'obtenir une bonne résolution et une profondeur d'examen importante.

L'utilisation, dans ce dispositif, de sondes multilentilles comportant plusieurs lentilles coaxiales et la possibilité d'utiliser simultanément plusieurs de ces sondes contribuent à diminuer le temps d'analyse.

Le dispositif selon l'invention permet de former simultanément plusieurs images d'un même défaut prises suivant différents plans d'analyse.

Les sondes du dispositif selon l'invention sont facilement réalisables technologiquement par le fait que les lentilles acoustiques d'une même sonde sont coaxiales.

Enfin les sondes du dispositif selon l'invention peuvent également être utilisées pour obtenir de façon simultanée les images, sur un même axe, de la surface extérieure de l'échantillon et d'une zone située à l'intérieur de l'échantillon, ce qui permet d'effectuer une compensation des signaux de retour provenant de cette zone en fonction des défauts éventuels de la surface de l'échantillon.

Le dispositif selon l'invention peut être appliqué par exemple au contrôle non destructif d'échantillons de céramique.

A titre d'exemple, dans le cas où l'échantillon est une céramique

0150843

- 9 -

de carbure de silicium d'épaisseur 10 mm et où le générateur fonctionne à une fréquence de 100 MHz, on peut détecter des défauts de 10 micromètres avec un pouvoir séparateur de 50 micromètres.

REVENDICATIONS

1/ Dispositif à ondes acoustiques focalisées pour étudier la structure d'un objet, comportant une sonde acoustique comprenant

- un transducteur électro-acoustique composé d'un élément médian et d'un élément annulaire entourant l'élément médian,

- et une pièce d'un matériau capable de transmettre lesdites ondes acoustiques, cette pièce présentant une face plane sur laquelle est fixée le transducteur et une face courbe disposée suivant un axe de la sonde, la face courbe comprenant une surface médiane et une surface annulaire opposées respectivement à l'élément médian et à l'élément annulaire du transducteur, les surfaces médiane et annulaire ayant des rayons de courbures différents l'un de l'autre et se raccordant suivant une ligne circulaire,

cette sonde permettant de former simultanément dans l'objet, par impulsions, deux zones de focalisation d'ondes acoustiques, suivant ledit axe à des profondeurs différentes, et d'analyser les échos provenant de ces zones,

caractérisé en ce que, pour réaliser simultanément deux images acoustiques de l'objet à des profondeurs différentes dans des plans perpendiculaires à l'axe de la sonde, le dispositif comporte en outre

- un générateur électrique (1) relié au transducteur à travers des moyens de commutation (2) desdits éléments, ce générateur (1) fonctionnant à une fréquence supérieure ou égale à 50 MHz et étant capable de délivrer une suite d'impulsions électriques, ces impulsions étant synchronisées avec la cadence de commutation,

un milieu fluide (14) étant en contact avec l'objet (13) et la face courbe (10,11) de la pièce (8), l'indice de réfraction acoustique de cette pièce étant supérieur à quatre, ce milieu étant capable de transmettre les impulsions d'ondes acoustiques formées par ladite pièce (8) en réponse auxdites impulsions électriques,

- des moyens de déplacement (15) relatif de l'objet (13) et de la sonde (3), ces moyens (15) étant capables de délivrer des informations sur la position de l'objet (13) par rapport à la sonde (3),

- et un circuit de traitement (16) relié au transducteur et aux moyens (15) de déplacement, ce circuit recevant les signaux électriques de retour délivrés par le transducteur en réponse aux échos des impulsions acoustiques renvoyées par lesdites zones (37, 39) de l'objet (13), ces signaux électriques de retour étant représentatifs de la structure interne de l'objet (13), le circuit de traitement étant capable de former des images desdites zones (37, 39) à partir de ces signaux électriques de retour.

2/ Dispositif selon la revendication 1, caractérisé en ce que la face courbe de ladite pièce présente en outre n-2 autres surfaces annulaires, n étant un nombre entier supérieur ou égal à 3, les n surfaces courbes (10, 11) ayant des rayons de courbure différents l'un de l'autre et formant, de l'axe à la périphérie de la pièce, n lentilles acoustiques centrées sur ledit axe (9), les n lentilles focalisant les ondes acoustiques dans n zones (37, 39) situées sur ledit axe (9) dans ledit objet (13), le transducteur comprenant n-2 autres éléments coaxiaux opposés aux n-2 autres surfaces courbes annulaires.

3/ Dispositif selon la revendication 1, caractérisé en ce que lesdits moyens (15) de déplacement comportent

- un diapason (26) entretenu électriquement sur lequel est fixée la sonde (20), ce diapason étant capable de faire vibrer cette sonde dans un plan perpendiculaire à la direction de son axe

- et des moyens (33) pour déplacer ledit objet (25) par rapport à la sonde (20) de manière qu'au moins un desdits volumes de concentration vienne traverser un des défauts de structure détectés, ledit circuit de traitement (16) étant capable de former l'image de ce défaut.

4/ Dispositif selon la revendication 1, caractérisé en ce qu'il comporte en outre d'autres sondes (21, 22) semblables à ladite sonde (3), les différentes sondes (20, 21, 22) étant reliées au générateur et étant fixées sur un support (23) à proximité l'une de l'autre de manière que leurs axes soient parallèles entre eux, les volumes de concentration des lentilles des différentes sondes (20, 21, 22) étant situés dans différentes portions de l'épaisseur (e) dudit objet.

5/ Dispositif selon la revendication 1, caractérisé en ce que les surfaces courbes de la pièce (8) sont cylindriques.

# FIG.1

FIG.2

# FIG. 3